# EUROPEAN PATENT APPLICATION

(11) **EP 4 572 156 A1**
(43) Date of publication of application: **18.06.2025**
(21) Application number: 23864459.5
(22) Date of filing: 30.06.2023
(51) Int. Cl.: H04B 1/40

(54) **TERMINAL DEVICE**

(30) Priority: 16.09.2022 CN 202211127665
(71) Applicant: Huawei Technologies Co., Ltd., Shenzhen, Guangdong 518129 (CN)
(72) Inventor: HUANG, Wei, Shenzhen, Guangdong 518129 (CN); HUANG, Xin, Shenzhen, Guangdong 518129 (CN); YANG, Pei, Shenzhen, Guangdong 518129 (CN)
(74) Representative: Gill Jennings & Every LLP
(86) International application number: PCT/CN2023/105291
(87) International publication number: WO 2024/055722

(57) **Abstract**

This application relates to the field of communication technologies, and provides a terminal device, making a first radio frequency signal and a second radio frequency signal share a same first radio frequency receive circuit, to implement integration of a satellite communication function module and a wireless communication function module on a same chip. The terminal device includes an antenna, a first radio frequency front-end circuit, a second radio frequency front-end circuit, a first radio frequency receive circuit, a satellite communication baseband circuit, and a first wireless communication baseband circuit. When being electrically connected to the antenna and the first radio frequency front-end circuit, the first radio frequency receive circuit receives the first radio frequency signal, processes the first radio frequency signal into a first baseband signal, and sends the first baseband signal to the satellite communication baseband circuit. The first radio frequency receive circuit is further configured to: when being electrically connected to the antenna and the second radio frequency front-end circuit, receive the second radio frequency signal, process the second radio frequency signal into a second baseband signal, and send the second baseband signal to the first wireless communication baseband circuit.

## Description

This application claims priority to Chinese Patent Application No. 202211127665.X, filed with the China National Intellectual Property Administration on September 16, 2022 and entitled "TERMINAL DEVICE", which is incorporated herein by reference in its entirety.

### TECHNICAL FIELD

This application relates to the field of communication technologies, and in particular, to a terminal device.

### BACKGROUND

At present, satellite communication is gradually integrated with wireless communication, to implement expansion and transformation of satellite communication services, such as short messages, pictures, and voices to a mass consumer market. For example, a satellite communication function module is widely integrated into a terminal device, to provide a user with a comprehensive all-scenario communication capability including a cellular communication technology, a wireless network communication technology (wireless fidelity, Wi-Fi), Bluetooth (Bluetooth, BT), a short message communication technology, and the like.

However, currently, the satellite communication function module and function modules such as a cellular, Wi-Fi, and BT function module are not on a same chip. Even if on the same chip, the satellite communication function module and the function modules such as the cellular, Wi-Fi, and BT function module are independent of each other.

### SUMMARY

This application provides a terminal device. A first radio frequency signal used to form a satellite communication baseband signal and a second radio frequency signal used to form a wireless communication baseband signal share a same first radio frequency receive circuit, to implement integration of a satellite communication function module and a wireless communication function module on a same chip.

According to a first aspect, this application provides a terminal device. The terminal device includes an antenna, a first radio frequency front-end circuit, a second radio frequency front-end circuit, a first radio frequency receive circuit, a satellite communication baseband circuit, and a first wireless communication baseband circuit. The first radio frequency receive circuit is configured to: when being electrically connected to the antenna and the first radio frequency front-end circuit, receive a first radio frequency signal, process the first radio frequency signal into a first baseband signal, and send the first baseband signal to the satellite communication baseband circuit. The first radio frequency receive circuit is further configured to: when being electrically connected to the antenna and the second radio frequency front-end circuit, receive a second radio frequency signal, process the second radio frequency signal into a second baseband signal, and send the second baseband signal to the first wireless communication baseband circuit. The first wireless communication baseband circuit is a Bluetooth baseband circuit, a Wi-Fi baseband circuit, or a cellular baseband circuit.

In this application, a downlink S band of satellite communication is close to a downlink frequency band of wireless communication, and the received radio frequency signals are similar in feature, so that the first radio frequency signal used to form a satellite communication baseband signal and the second radio frequency signal used to form a wireless communication baseband signal may share a same first radio frequency receive circuit. In other words, an input end of the first radio frequency receive circuit is electrically connected to the first radio frequency front-end circuit or the second radio frequency front-end circuit, to receive the first radio frequency signal sent by the first radio frequency front-end circuit, or receive the second radio frequency signal sent by the second radio frequency front-end circuit. In this way, a satellite communication function module and a wireless communication function module are deeply coupled and integrated on a same chip, to improve product integration of the terminal device, reduce board-level costs by reducing board-level cabling, and further avoid low integration of the chip due to independence of the satellite communication function module and the wireless communication function module from each other.

For example, the first radio frequency receive circuit may include a first frequency mixer, a built-in filter, a built-in low noise amplifier, a built-in variable gain amplifier, an analog-to-digital conversion circuit, and the like. When the antenna is electrically connected to the first radio frequency receive circuit through the first radio frequency front-end circuit, a parameter of each component in the first radio frequency receive circuit may be configured, to ensure that the first radio frequency receive circuit receives a first radio frequency signal of a specific strength within a correct frequency band range. After receiving the first radio frequency signal, the first radio frequency receive circuit may further amplify the first radio frequency signal through the built-in low noise amplifier, so that a signal strength of the amplified first radio frequency signal better meets a signal strength for satellite communication. Alternatively, the first frequency mixer may be used to perform frequency mixing on the first radio frequency signal and a first local oscillator signal provided by a first local oscillator circuit, to obtain a baseband signal. A frequency of the first local oscillator signal is set to be corresponding to a frequency band for satellite communication. Alternatively, the built-in filter may be used to filter the baseband signal obtained by performing frequency mixing through the first frequency mixer, so that a frequency band of the baseband signal better meets a frequency band for satellite communication, and out-of-band interference is filtered out. Alternatively, the built-in variable gain amplifier may be used to control a gain of the baseband signal, to increase a power of the baseband signal, and prevent a signal saturation phenomenon of the baseband signal. Then, a baseband signal in an analog signal form is converted into a digital signal through the analog-to-digital conversion circuit, to obtain the first baseband signal, and the first baseband signal is sent to the satellite communication baseband circuit 40. The built-in filter may be a low-pass filter (low-pass filter, LPF).

For another example, when the antenna is electrically connected to the first radio frequency receive circuit through the second radio frequency front-end circuit, a parameter of each component in the first radio frequency receive circuit may be further configured, to ensure that the first radio frequency receive circuit receives a second radio frequency signal of a specific strength within a correct frequency band range. After receiving the second radio frequency signal, the first radio frequency receive circuit may further amplify the second radio frequency signal through the built-in low noise amplifier, so that a signal strength of the amplified second radio frequency signal better meets a signal strength for wireless communication. Alternatively, the first frequency mixer may be used to perform frequency mixing on the second radio frequency signal and a first local oscillator signal provided by a first local oscillator circuit, to obtain a baseband signal. A frequency of the first local oscillator signal is set to be corresponding to a frequency band for wireless communication. Alternatively, the built-in filter may be used to filter the baseband signal obtained by performing frequency mixing through the first frequency mixer, so that a frequency band of the baseband signal better meets a frequency band for wireless communication, and out-of-band interference is filtered out. Alternatively, the built-in variable gain amplifier may be used to control a gain of the baseband signal, to increase a power of the baseband signal, and prevent a signal saturation phenomenon of the baseband signal. Then, the baseband signal in an analog signal form is converted into a digital signal through the analog-to-digital conversion circuit, to obtain the second baseband signal, and the second baseband signal is sent to the first wireless communication baseband circuit.

Based on the foregoing descriptions, in this application, the satellite communication baseband circuit and the first wireless communication baseband circuit may be further integrated with the first radio frequency receive circuit on a same chip, to further improve product integration of the terminal device and reduce board-level costs by reducing board-level cabling.

In some possible implementations, the terminal device further includes a second radio frequency receive circuit and a second wireless communication baseband circuit. The second radio frequency receive circuit is configured to: when being electrically connected to the antenna and the second radio frequency front-end circuit, receive the second radio frequency signal, process the second radio frequency signal into a third baseband signal, and send the third baseband signal to the second wireless communication baseband circuit. The second wireless communication baseband circuit is a Bluetooth baseband circuit, a Wi-Fi baseband circuit, or a cellular baseband circuit.

In this case, the terminal device may have two working states. In a first working state, the terminal device performs satellite communication when the antenna is electrically connected to the first radio frequency receive circuit through the first radio frequency front-end circuit. In a second working state, when the antenna is electrically connected to the first radio frequency receive circuit and the second radio frequency front-end circuit through the second radio frequency front-end circuit 2, the terminal device simultaneously performs two different types of wireless communication, for example, Wi-Fi communication and BT communication.

For the second working state, because both a frequency band range of Wi-Fi (for example, 2.4G Wi-Fi) communication and a frequency band range of BT communication are 2400 MHz to 2483.5 MHz, the first radio frequency receive circuit and the second radio frequency receive circuit may share the second radio frequency signal output by the second radio frequency front-end circuit. In this way, the first radio frequency receive circuit and the second radio frequency receive circuit are integrated on a same chip, to improve product integration of the terminal device and reduce board-level costs by reducing board-level cabling.

In some possible implementations, a strength of a radio frequency signal that is received by the antenna and that is for a satellite signal is usually weak. Therefore, the first radio frequency front-end circuit includes a low noise amplifier, and amplifies the radio frequency signal for satellite communication through the low noise amplifier. A signal strength of a radio frequency signal that is received by the antenna and that is for wireless communication is greater than the strength of the radio frequency signal for the satellite signal. In some cases, if the radio frequency signal that is received by the antenna and that is for wireless communication reaches a preset signal strength, the radio frequency signal that is received by the antenna and that is for wireless communication does not need to be amplified through the low noise amplifier. In some other cases, if the radio frequency signal that is received by the antenna and that is for wireless communication does not reach the preset signal strength, the radio frequency signal that is received by the antenna and that is for wireless communication needs to be amplified through the second radio frequency front-end circuit.

Based on this, the second radio frequency front-end circuit includes a low noise amplifier and a first switch that are connected in parallel. The first switch is turned on or turned off when the first radio frequency receive circuit is electrically connected to the antenna and the second radio frequency front-end circuit, or when the first radio frequency receive circuit and the second radio frequency receive circuit are electrically connected to the antenna and the second radio frequency front-end circuit. If the radio frequency signal that is received by the antenna and that is for wireless communication reaches the preset signal strength, the first switch is turned on, and the radio frequency signal that is received by the antenna and that is for wireless communication does not need to be amplified through the amplifier. If the wireless communication signal received by the antenna does not reach the preset signal strength, the first switch is turned off, and the radio frequency signal that is received by the antenna and that is for wireless communication is amplified through the low noise amplifier.

In some possible implementations, the terminal device further includes a second switch and a third switch. The antenna is electrically connected to the first radio frequency front-end circuit or the second radio frequency front-end circuit through the second switch. The first radio frequency receive circuit is electrically connected to the first radio frequency front-end circuit or the second radio frequency front-end circuit through the third switch. The second switch and the third switch may be selector switches.

In some possible implementations, the terminal device further includes a fourth switch. The first radio frequency receive circuit is electrically connected to the satellite communication baseband circuit or the first wireless communication baseband circuit through the fourth switch.

When the antenna is electrically connected to the first radio frequency receive circuit through the first radio frequency front-end circuit, the first radio frequency receive circuit is electrically connected to the satellite communication baseband circuit through the fourth switch, so that the first radio frequency receive circuit sends the first baseband signal to the satellite communication baseband circuit.

When the antenna is electrically connected to the first radio frequency receive circuit through the second radio frequency front-end circuit, the first radio frequency receive circuit is electrically connected to the first wireless communication baseband circuit through the fourth switch, so that the first radio frequency receive circuit sends the second baseband signal to the first wireless communication baseband circuit.

In some possible implementations, the terminal device further includes a baseband transmit circuit and a third radio frequency front-end circuit. The baseband transmit branch is configured to receive a fourth baseband signal sent by the first wireless communication baseband circuit, process the fourth baseband signal into a third radio frequency signal, and send the third radio frequency signal to the antenna through the third radio frequency front-end circuit, to implement a signal transmitting function.

Herein, the first baseband transmit circuit electrically connected to the first wireless communication baseband circuit may be integrated with the satellite communication baseband circuit, the first wireless communication baseband circuit, and the first radio frequency receive circuit on a same chip, to further improve product integration of the terminal device and reduce board-level costs by reducing board-level cabling.

In some possible implementations, the first wireless communication baseband circuit is a cellular baseband circuit. A frequency band of the third radio frequency signal overlaps a frequency band of the first radio frequency signal, and the second switch is a three-to-one selector, to perform satellite communication by using a radio frequency signal received by the antenna, perform cellular communication by using a radio frequency signal received by the antenna, or transmit the third radio frequency signal by using the antenna in a time division manner.

Alternatively, a frequency band of the third radio frequency signal does not overlap a frequency band of the first radio frequency signal, the second switch is a two-to-one selector, and the second radio frequency front-end circuit is electrically connected to the third radio frequency front-end circuit. In this way, satellite communication may be performed by using the radio frequency signal received by the antenna, while the third radio frequency signal may be transmitted by using the antenna.

In some possible implementations, the first radio frequency front-end circuit, the second radio frequency front-end circuit, the first radio frequency receive circuit, the satellite communication baseband circuit, and the first wireless communication baseband circuit are integrated on a same chip, to further improve product integration of the terminal device and reduce board-level costs by reducing board-level cabling.

### BRIEF DESCRIPTION OF DRAWINGS

FIG. 1a is an interaction diagram of satellite communication according to an embodiment of this application;
FIG. 1b is a connection diagram of satellite communication modules and a connection diagram of wireless communication modules according to the conventional technology;
FIG. 2a is a circuit diagram of a terminal device according to an embodiment of this application;
FIG. 2b is another circuit diagram of a terminal device according to an embodiment of this application;
FIG. 2c is still another circuit diagram of a terminal device according to an embodiment of this application;
FIG. 3a is still another circuit diagram of a terminal device according to an embodiment of this application;
FIG. 3b is still another circuit diagram of a terminal device according to an embodiment of this application;
FIG. 3c is still another circuit diagram of a terminal device according to an embodiment of this application;
FIG. 3d is still another circuit diagram of a terminal device according to an embodiment of this application;
FIG. 4a is still another circuit diagram of a terminal device according to an embodiment of this application;
FIG. 4b is still another circuit diagram of a terminal device according to an embodiment of this application;
FIG. 5a is still another circuit diagram of a terminal device according to an embodiment of this application; and
FIG. 5b is still another circuit diagram of a terminal device according to an embodiment of this application.

### Reference numerals:

10: antenna; 21: first radio frequency front-end circuit; 22: second radio frequency front-end circuit; 23: third radio frequency front-end circuit; 31: first radio frequency receive circuit; 32: second radio frequency receive circuit; 33: first baseband transmit circuit; 34: second baseband transmit circuit; 40: satellite communication baseband circuit; 41: first wireless communication baseband circuit; 42: second wireless communication baseband circuit; 51: first switch; 52: second switch; 53: third switch; 54: fourth switch.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. "And/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "Mounting", "connection", "being connected to", and the like should be understood in a broad sense, for example, may be a fixed connection, a detachable connection, or an integral connection, or may be a direct connection, an indirect connection through an intermediate medium, or internal communication between two elements. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device. "On", "below", "left", "right", and the like are used only relative to the orientation of the components in the accompanying drawings. These directional terms are relative concepts, are used for relative descriptions and clarifications, and may change accordingly as positions at which the components in the accompanying drawings are placed change.

In recent years, a BeiDou navigation satellite system (BeiDou navigation satellite system, BDS), for which global satellite networking is completed in 2020, develops rapidly, and is a third mature navigation satellite system following a navigation satellite system like a global positioning system (global positioning system, GPS) and a global navigation satellite system (global navigation satellite system, GLONASS). In addition, the BeiDou navigation satellite system is a satellite system with navigation and communication capabilities. In a radio navigation satellite system (radio navigation satellite system), a user receives a satellite radio navigation signal, independently measures distances to at least four satellites, and calculates a location, a speed, and a navigation parameter of the user, to implement a satellite navigation function. A radio determination satellite system (radio determination satellite system, RDSS), as a unique service function of the BeiDou navigation satellite system, can provide a two-way short message information service, to implement a satellite communication function. A BeiDou short message is a special function of the BeiDou navigation satellite system, and is used to distinguish the BeiDou navigation satellite system from other satellite communication systems in the world.

The BeiDou short message has been widely used in fields such as disaster relief, field work, and no man's land search and rescue. A terminal device integrated with an RDSS function module may perform emergency communication by using the BeiDou short message.

Further, a BeiDou-3 global navigation satellite system continuously improves a service capability of the BeiDou short message, so that a regional short message communication (regional short message communication, RSMC) in the BeiDou short message has reached a maximum communication capability of 14,000 bits (1000 Chinese characters) each time, and a global short message communication (global short message communication, GSMC) in the BeiDou short message has reached a communication capability of 560 bits (40 Chinese characters) each time. Based on the stronger communication capability, a BeiDou short message communication service is further expanded to the consumer field to provide more extensive services such as emergency rescue alarm, emergency communication, and location report, thereby fully demonstrating a core application value of a BeiDou short message function. In some possible implementations, the terminal device may be an in-vehicle terminal device, a mobile phone, a BeiDou handheld device, or the like.

In addition to satellite communication, a low-orbit satellite mobile communication service provider represented by the Globalstar satellite (Globalstar satellite) or the like is also actively developing narrowband satellite communication services, such as short message, voice, and picture services. Satellite systems such as Starlink and Iridium are also planned to support a communication function of a satellite-to-cellular service. In the future, the satellite communication function will be more widely applied to products such as a consumer terminal.

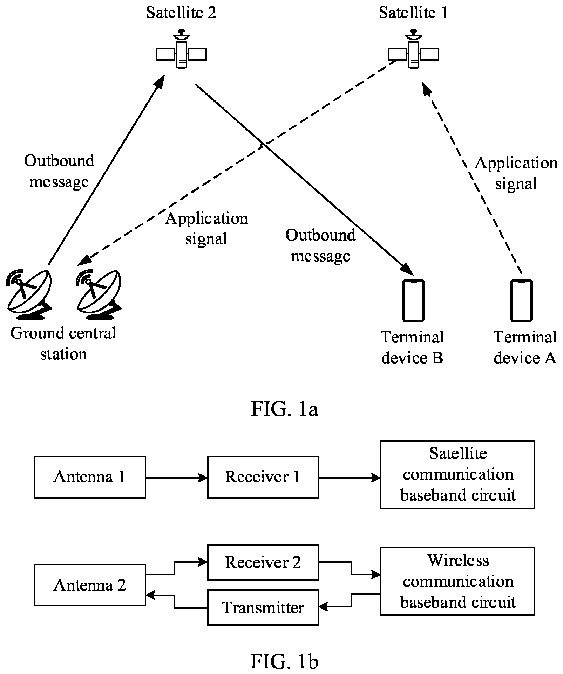

As shown in FIG. 1a, an example in which a transmitter is a terminal device A and a receiver is a terminal device B is used. A communication procedure of a satellite system like an RDSS is as follows: After completing satellite searching, the terminal device A first encrypts an application signal including an identity (identity document, ID) of the terminal device B and communication content, and then sends the encrypted application signal to a visible satellite 1; the visible satellite 1 transparently transmits and forwards an uplink application signal to a ground central station; after receiving the application signal, the ground central station decrypts and then encrypts the application signal; when the terminal device B initiates an information query, the ground central station encrypts information that belongs to the terminal device B, adds the encrypted information into a satellite 2 visible to the terminal device B, and broadcasts the encrypted information to the terminal device B through the satellite 2; and the terminal device B receives an outbound message, demodulates and decrypts the outbound message, to complete satellite communication once.

FIG. 1a shows an example in which a visible satellite of the terminal device A is the satellite 1, a visible satellite of the terminal device B is the satellite 2, and the satellite 1 and the satellite 2 are different satellites. In some other possible implementations, visible satellites of the terminal device A and the terminal device B may alternatively be a same satellite, that is, the satellite 1 and the satellite 2 are a same satellite.

As a satellite communication function is more widely applied to a consumer market, a satellite communication function module may be further integrated with a wireless communication function module like a Wi-Fi function module, a BT function module, or a cellular function module into a same terminal device. For example, the satellite communication function module and the BT function module are integrated into the same terminal device A, and the satellite communication function module communicates with the terminal device B through the BT function module, to implement interconnection between the satellite communication function module and the mobile Internet. Alternatively, the satellite communication function module and the wireless communication function module like the BT function module, the Wi-Fi function module, or the cellular function module are directly integrated into a same intelligent device, and interconnection and interworking between the satellite communication function module and the wireless communication function module like the BT function module, the Wi-Fi function module, or the cellular function module are implemented through an application processor in the intelligent device.

However, as shown in FIG. 1b, although the satellite communication function module integrated into the terminal device A may communicate with the terminal device B, and the satellite communication function module and the wireless communication function module like the BT function module, the Wi-Fi function module, and the cellular function module that are in the same terminal device may communicate with each other, an existing satellite communication function module is usually integrated on an independent chip. Consequently, the terminal device has low product integration, and high board-level costs. Therefore, deep coupling of or even integrating the satellite communication function module, and the wireless communication function module like the Wi-Fi function module, the BT function module, or the cellular function module on a same chip becomes an industrial development requirement.

Even if the satellite communication function module is integrated with the cellular function module, the Wi-Fi function module, the BT function module, and the like on a same chip, the satellite communication function module and the cellular function module, the Wi-Fi function module, the BT function module, and the like are independent of each other, and integration of the chip is low.

Based on the foregoing problem, the inventor finds that, because a satellite radio downlink frequency band specified by the International Telecommunication Union (ITU) is an S band, and a range of the S band is 2483.5 MHz to 2500 MHz, downlink frequency bands of the BeiDou short message, the Globalstar, and the like are this frequency band. However, a frequency band range of Wi-Fi (for example, 2.4 G Wi-Fi) communication and a frequency band range of BT communication are 2400 MHz to 2483.5 MHz, and a frequency band range of cellular (for example, LTE B41 and NR N41) communication is 2496 MHz to 2690 MHz. A downlink frequency band of this type of satellite communication is close to frequency bands of Wi-Fi communication, BT communication, and cellular communication, and received radio frequency signals are similar in feature. Therefore, embodiments of this application provide a terminal device. As frequency bands of satellite communication, Wi-Fi communication, BT communication, and cellular communication are close, and received radio frequency signals are similar in feature, the terminal device may enable satellite communication and Wi-Fi communication and/or BT communication, or cellular communication to share at least some of received radio frequency receive paths, to implement integration of a downlink part of the satellite communication function module and the wireless communication function module like the BT function module and/or the Wi-Fi function module or the cellular function module on a same chip.

The following describes a circuit structure of the terminal device in detail with reference to the accompanying drawings.

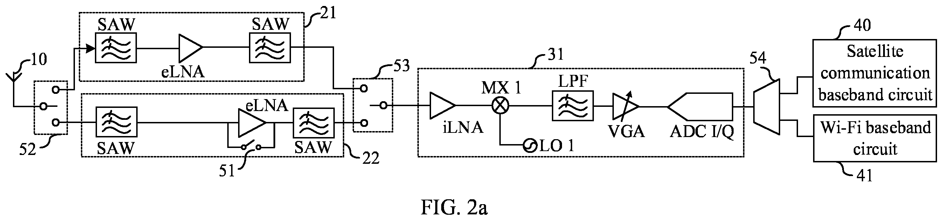

As shown in FIG. 2a to FIG. 2c, the terminal device includes an antenna 10, a first radio frequency front-end circuit 21, a second radio frequency front-end circuit 22, a first radio frequency receive circuit 31, a satellite communication baseband circuit 40, and a first wireless communication baseband circuit 41.

When being configured to electrically connect to the antenna 10 and the first radio frequency front-end circuit 21, the first radio frequency receive circuit 31 receives a first radio frequency signal, processes the first radio frequency signal into a first baseband signal, and sends the first baseband signal to the satellite communication baseband circuit 40.

The first radio frequency receive circuit 31 is configured to: when being electrically connected to the antenna 10 and the second radio frequency front-end circuit 22, receive a second radio frequency signal, process the second radio frequency signal into a second baseband signal, and send the second baseband signal to the first wireless communication baseband circuit 41.

In some possible implementations, the satellite communication baseband circuit 40 may be an RDSS baseband circuit or the like, and is configured to receive a baseband signal for satellite communication. The first wireless communication baseband circuit 41 may be a wireless communication baseband circuit like a Wi-Fi baseband circuit, a BT baseband circuit, a ZigBee baseband circuit, or a radio frequency identification (radio frequency identification, RFID) baseband circuit. For ease of description, the following uses an example in which the first wireless communication baseband circuit 41 is a Wi-Fi baseband circuit for description. The Wi-Fi baseband circuit is configured to receive a Wi-Fi baseband signal for Wi-Fi communication.

A communication principle of the terminal device may be implemented in the following process.

As shown in FIG. 2a, the antenna 10 is configured to receive radio frequency signals, and the radio frequency signals may be processed for satellite communication and Wi-Fi communication. Because a signal frequency band of a signal for satellite communication is different from a signal frequency band of a signal for Wi-Fi communication, the antenna 10 may respectively transmit, through the first radio frequency front-end circuit 21 and the second radio frequency front-end circuit 22, radio frequency signals for satellite communication and Wi-Fi communication.

As shown in FIG. 2a, the first radio frequency front-end circuit 21 may include an external filter, an external amplifier, and the like. When the antenna 10 is electrically connected to the first radio frequency receive circuit 31 through the first radio frequency front-end circuit 21, after receiving the radio frequency signal, the first radio frequency front-end circuit 21 may filter the radio frequency signal through the external filter, to filter the radio frequency signal to a frequency band for satellite communication, and filter out out-of-band interference. Alternatively, the radio frequency signal may be amplified through the external amplifier, so that a signal strength of the amplified radio frequency signal meets a signal strength for satellite communication. The filtered and amplified radio frequency signal may be referred to as the first radio frequency signal. The external filter may include, for example, at least one surface acoustic wave (surface acoustic wave, SAW) filter, and the external amplifier may include at least one low noise amplifier (low noise amplifier, LNA).

Still refer to FIG. 2a. The second radio frequency front-end circuit 22 may also include an external filter, an external amplifier, and the like. When the antenna 10 is electrically connected to the first radio frequency receive circuit 31 through the second radio frequency front-end circuit 22, after receiving the radio frequency signal, the second radio frequency front-end circuit 22 may filter the radio frequency signal through the external filter, to filter the radio frequency signal to a frequency band for Wi-Fi communication. Alternatively, the radio frequency signal may be amplified through the external amplifier, so that a signal strength of the amplified radio frequency signal meets a signal strength for Wi-Fi communication. The filtered and amplified radio frequency signal may be referred to as the second radio frequency signal. The external filter may include, for example, at least one SAW, and the external amplifier may include at least one LNA.

A downlink S band of satellite communication is close to a downlink frequency band of Wi-Fi communication, and the received radio frequency signals are similar in feature, so that the first radio frequency signal used to form a satellite communication baseband signal and the second radio frequency signal used to form a Wi-Fi baseband signal may share a same first radio frequency receive circuit 31. In other words, an input end of the first radio frequency receive circuit 31 is electrically connected to the first radio frequency front-end circuit 21 or the second radio frequency front-end circuit 22, to receive the first radio frequency signal sent by the first radio frequency front-end circuit 21, or receive the second radio frequency signal sent by the second radio frequency front-end circuit 22. In this way, a satellite communication function module and a Wi-Fi function module are deeply coupled and integrated on a same chip, to improve product integration of the terminal device, reduce board-level costs by reducing board-level cabling, and further avoid low integration of the chip due to independence of the satellite communication function module and the Wi-Fi function module from each other.

In some possible implementations, the terminal device may further include a second switch 52 and a third switch 53. The antenna 10 may be electrically connected to the first radio frequency front-end circuit 21 or the second radio frequency front-end circuit 22 through the second switch 52. The first radio frequency receive circuit 31 may be electrically connected to the first radio frequency front-end circuit 21 or the second radio frequency front-end circuit 22 through the third switch 53. The second switch 52 and the third switch 53 may be selector switches.

As shown in FIG. 2a, the first radio frequency receive circuit 31 may include a first frequency mixer MX 1, a built-in filter, a built-in LNA, a built-in variable gain amplifier (variable gain amplifier, VGA), an analog-to-digital conversion circuit (analog-to-digital conversion, ADC), and the like. The terminal device may further include a first local oscillator circuit LO 1.

When the antenna 10 is electrically connected to the first radio frequency receive circuit 31 through the first radio frequency front-end circuit 21, a parameter of each component in the first radio frequency receive circuit 31 may be configured, to ensure that the first radio frequency receive circuit 31 receives a first radio frequency signal of a specific strength within a correct frequency band range. After receiving the first radio frequency signal, the first radio frequency receive circuit 31 may further amplify the first radio frequency signal through the built-in LNA, so that a signal strength of the amplified first radio frequency signal better meets a signal strength for satellite communication. Alternatively, the first frequency mixer MX 1 may be used to perform frequency mixing on the first radio frequency signal and a first local oscillator signal provided by the first local oscillator circuit LO 1, to obtain a baseband signal. A frequency of the first local oscillator signal is set to be corresponding to a frequency band for satellite communication. Alternatively, the built-in filter may be used to filter the baseband signal obtained by performing frequency mixing through the first frequency mixer MX 1, so that a frequency band of the baseband signal better meets a frequency band for satellite communication, and out-of-band interference is filtered out. Alternatively, the built-in VGA may be used to control a gain of the baseband signal, to increase a power of the baseband signal, and prevent a signal saturation phenomenon of the baseband signal. Then, a baseband signal in an analog signal form is converted into a digital signal through the ADC, to obtain a first baseband signal, and the first baseband signal is sent to the satellite communication baseband circuit 40. The built-in filter may be a low-pass filter (low-pass filter, LPF). To distinguish an external LNA from the built-in LNA, the external LNA may be an eLNA, and the built-in LNA may be an iLNA.

When the antenna 10 is electrically connected to the first radio frequency receive circuit 31 through the second radio frequency front-end circuit 22, a parameter of each component in the first radio frequency receive circuit 31 may be further configured, to ensure that the first radio frequency receive circuit 31 receives a second radio frequency signal of a specific strength within a correct frequency band range. After receiving the second radio frequency signal, the first radio frequency receive circuit 31 may further amplify the second radio frequency signal through the iLNA, so that a signal strength of the amplified second radio frequency signal better meets a signal strength for Wi-Fi communication. Alternatively, the first frequency mixer MX 1 may be used to perform frequency mixing on the second radio frequency signal and a first local oscillator signal provided by the first local oscillator circuit LO 1, to obtain a baseband signal. A frequency of the first local oscillator signal is set to be corresponding to a frequency band for Wi-Fi communication. Alternatively, the built-in filter may be used to filter the baseband signal obtained by performing frequency mixing through the first frequency mixer MX 1, so that a frequency band of the baseband signal better meets a frequency band for Wi-Fi communication, and out-of-band interference is filtered out. Alternatively, the VGA may be used to control a gain of the baseband signal, to increase a power of the baseband signal, and prevent a signal saturation phenomenon of the baseband signal. Then, a baseband signal in an analog signal form is converted into a digital signal through the ADC, to obtain a second baseband signal, and the second baseband signal is sent to the first wireless communication baseband circuit 41. The built-in filter may be an LPF.

In addition, in this embodiment of this application, the satellite communication baseband circuit 40 and the first wireless communication baseband circuit 41 may be further integrated with the first radio frequency receive circuit 31 on a same chip, to further improve product integration of the terminal device and reduce board-level costs by reducing board-level cabling.

In some possible implementations, the terminal device may further include a fourth switch 54. The first radio frequency receive circuit 31 is electrically connected to the satellite communication baseband circuit 40 or the first wireless communication baseband circuit 41 through the fourth switch 54.

When the antenna 10 is electrically connected to the first radio frequency receive circuit 31 through the first radio frequency front-end circuit 21, the first radio frequency receive circuit 31 is electrically connected to the satellite communication baseband circuit 40 through the fourth switch 54, so that the first radio frequency receive circuit 31 sends the first baseband signal to the satellite communication baseband circuit 40.

When the antenna 10 is electrically connected to the first radio frequency receive circuit 31 through the second radio frequency front-end circuit 22, the first radio frequency receive circuit 31 is electrically connected to the first wireless communication baseband circuit 41 through the fourth switch 54, so that the first radio frequency receive circuit 31 sends the second baseband signal to the first wireless communication baseband circuit 41.

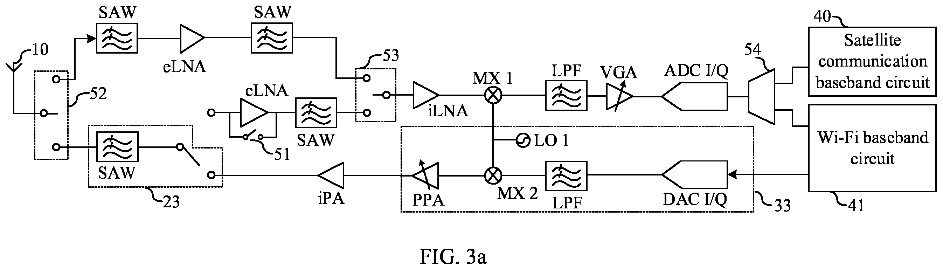

In some embodiments, as shown in FIG. 3a, the terminal device may further include a first baseband transmit circuit 33 and a third radio frequency front-end circuit 23. An input end of the first baseband transmit circuit 33 is electrically connected to the first wireless communication baseband circuit 41, and an output end of the first baseband transmit circuit 33 is electrically connected to the third radio frequency front-end circuit 23. The first baseband transmit circuit 33 is configured to receive a fourth baseband signal sent by the first wireless communication baseband circuit 41. The first baseband transmit circuit 33 includes a digital-to-analog conversion circuit (digital-to-analog converter, DAC), a built-in frequency mixer, a built-in amplifier, and the like. The DAC, the built-in frequency mixer, and the built-in amplifier may be used to perform amplification, filtering, and frequency mixing on the fourth baseband signal, to obtain the third radio frequency signal. A frequency band and a signal strength of the third radio frequency signal meet the frequency band and the signal strength for Wi-Fi communication. Then, the third radio frequency signal is transmitted through the third radio frequency front-end circuit 23 and the antenna 10. In this way, the terminal device performs satellite communication by using the radio frequency signal received by the antenna 10, performs Wi-Fi communication by using the radio frequency signal received by the antenna 10, and transmits the third radio frequency signal by using the antenna 10 in a time division manner.

Herein, the third radio frequency front-end circuit 23 or the second radio frequency front-end circuit 22 may be electrically connected to the antenna 10 through a selector switch. When the third radio frequency front-end circuit 23 is electrically connected to the antenna 10 through the selector switch, the third radio frequency front-end circuit 23 may transmit, through the antenna 10, the third radio frequency signal for Wi-Fi communication. When the second radio frequency front-end circuit 22 is electrically connected to the antenna 10 through the selector switch, the second radio frequency front-end circuit 22 may receive, through the antenna 10, a radio frequency signal for Wi-Fi communication.

As shown in FIG. 3a, satellite communication is performed by using the radio frequency signal received by the antenna 10, Wi-Fi communication is performed by using the radio frequency signal received by the antenna 10, the third radio frequency signal is transmitted by using the antenna 10, and the three operations are implemented in a time division manner. Therefore, the first radio frequency receive circuit 31 and the first baseband transmit circuit 33 may further share the first local oscillator LO 1. Based on different working states, the first local oscillator LO 1 may provide local oscillator signals of different frequency bands for the first radio frequency receive circuit 31 or the first baseband transmit circuit 33.

In some possible implementations, the first baseband transmit circuit 33 electrically connected to the first wireless communication baseband circuit 41 may be integrated with the satellite communication baseband circuit 40, the first wireless communication baseband circuit 41, and the first radio frequency receive circuit 31 on a same chip, to further improve product integration of the terminal device and reduce board-level costs by reducing board-level cabling.

The foregoing description is an example for describing a case in which the first wireless communication baseband circuit 41 is a Wi-Fi baseband circuit. In some other possible implementations, the first wireless communication baseband circuit 41 may alternatively be a BT baseband circuit, a ZigBee baseband circuit, an RFID baseband circuit, or the like.

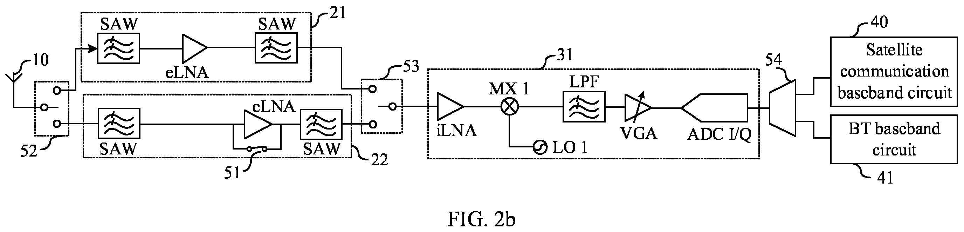

For example, as shown in FIG. 2b, if the first wireless communication baseband circuit 41 is a BT baseband circuit, when the antenna 10 is electrically connected to the first radio frequency receive circuit 31 through the second radio frequency front-end circuit 22, any one of the foregoing amplifiers may amplify the radio frequency signal sent by the antenna 10, so that a signal strength of the amplified radio frequency signal better meets a signal strength for BT communication. A frequency of the first local oscillator signal corresponds to a frequency band for BT communication. Any one of the foregoing filters may filter the radio frequency signal sent by the antenna 10, so that a frequency band of the radio frequency signal meets the frequency band for BT communication. Other explanations, descriptions, and beneficial effects are the same as those described in the foregoing description that the first wireless communication baseband circuit 41 is a Wi-Fi baseband circuit. Details are not described herein again.

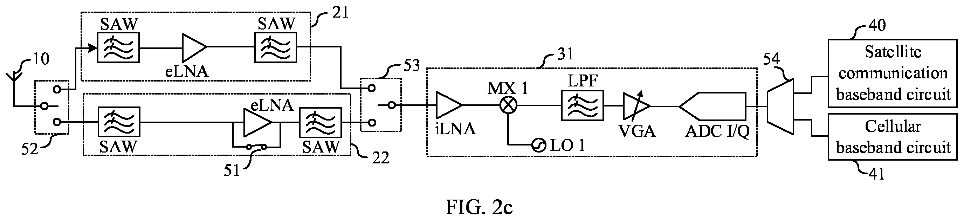

For another example, as shown in FIG. 2c, if the first wireless communication baseband circuit 41 is a cellular baseband circuit, when the antenna 10 is electrically connected to the first radio frequency receive circuit 31 through the second radio frequency front-end circuit 22, any one of the foregoing amplifiers may amplify the radio frequency signal sent by the antenna 10, so that a signal strength of the amplified radio frequency signal better meets a signal strength for cellular communication. The frequency of the first local oscillator signal corresponds to a frequency band for cellular communication. Any one of the foregoing filters may filter the radio frequency signal sent by the antenna 10, so that a frequency band of the radio frequency signal meets the frequency band for cellular communication. Other explanations, descriptions, and beneficial effects are the same as those described in the foregoing description that the first wireless communication baseband circuit 41 is a Wi-Fi baseband circuit. Details are not described herein again.

In some embodiments, a strength of a radio frequency signal that is received by the antenna 10 and that is for a satellite signal is usually weak. Therefore, the first radio frequency front-end circuit 21 includes an eLNA, and amplifies the radio frequency signal for satellite communication through the eLNA. A strength of a radio frequency signal that is received by the antenna 10 and that is for wireless communication is greater than the strength of the radio frequency signal for satellite communication. In some cases, if the radio frequency signal that is received by the antenna 10 and that is for wireless communication reaches a preset signal strength, the radio frequency signal that is received by the antenna 10 and that is for wireless communication does not need to be amplified through the eLNA. In some other cases, if the radio frequency signal that is received by the antenna 10 and that is for wireless communication does not reach the preset signal strength, the radio frequency signal that is received by the antenna 10 and that is for wireless communication needs to be amplified through the second radio frequency front-end circuit 22.

For wireless communication signals of different strengths, in this embodiment of this application, the second radio frequency front-end circuit 22 may include an eLNA and a first switch 51 that are connected in parallel. If the radio frequency signal that is received by the antenna 10 and that is for wireless communication reaches the preset signal strength, the first switch 51 is turned on, and the radio frequency signal that is received by the antenna 10 and that is for wireless communication does not need to be amplified through the eLNA. If the radio frequency signal that is received by the antenna 10 and that is for wireless communication does not reach the preset signal strength, the first switch 51 is turned off, and the radio frequency signal that is received by the antenna 10 and that is for wireless communication is amplified through the eLNA.

Herein, the wireless communication signal may be a radio frequency signal that is received by the antenna 10 and that is for Wi-Fi communication or BT communication. The preset signal strength may be specified according to an actual communication requirement. This is not limited in this embodiment of this application.

Certainly, for wireless communication signals of different strengths, the wireless communication signals may alternatively be amplified or not amplified in another manner in different cases. This is not limited in this embodiment of this application. For example, the foregoing eLNA and the first switch 51 that are connected in parallel may be integrated into the first radio frequency receive circuit 31. If the wireless communication signal received by the antenna 10 reaches the preset signal strength, the first switch 51 is turned on. If the wireless communication signal received by the antenna 10 does not reach the preset signal strength, the first switch 51 is turned off.

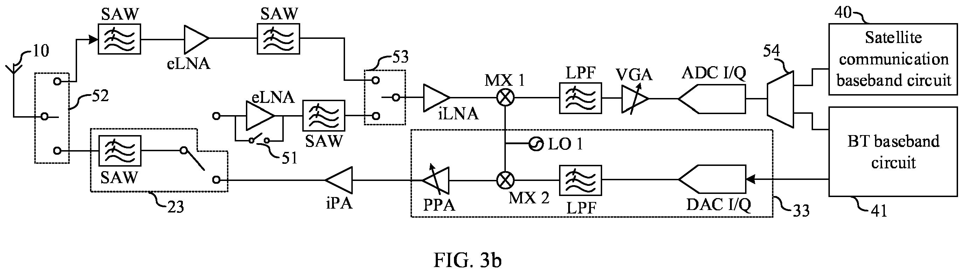

In some embodiments, as shown in FIG. 3b, when the first wireless communication baseband circuit 41 is a BT baseband circuit or a cellular baseband circuit, the terminal device may further include a first baseband transmit circuit 33 and a third radio frequency front-end circuit 23. An input end of the first baseband transmit circuit 33 is electrically connected to the first wireless communication baseband circuit 41, and an output end of the first baseband transmit circuit 33 is electrically connected to the third radio frequency front-end circuit 23. The first baseband transmit circuit 33 is configured to receive a fourth baseband signal sent by the first wireless communication baseband circuit 41. The first baseband transmit circuit 33 includes a DAC, a built-in frequency mixer, a built-in amplifier, and the like. The DAC, the built-in frequency mixer, and the built-in amplifier may be used to perform amplification, filtering, and frequency mixing on the fourth baseband signal, to obtain the third radio frequency signal. A frequency band and a signal strength of the third radio frequency signal meet the frequency band and the signal strength for BT communication or cellular communication. Then, the third radio frequency signal is transmitted through the third radio frequency front-end circuit 23. In this way, the terminal device performs satellite communication by using the radio frequency signal received by the antenna 10, performs BT or cellular communication by using the radio frequency signal received by the antenna 10, and transmits the third radio frequency signal by using the antenna 10 in a time division manner.

If the first wireless communication baseband circuit 41 is a BT baseband circuit, for explanations, descriptions, and beneficial effects of the first baseband transmit circuit 33 and the third radio frequency front-end circuit 23, refer to the explanations, descriptions, and beneficial effects existing when the first wireless communication baseband circuit 41 is a Wi-Fi baseband circuit. Details are not described herein again.

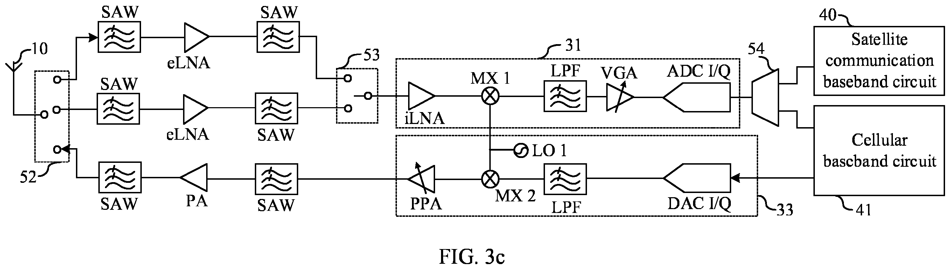

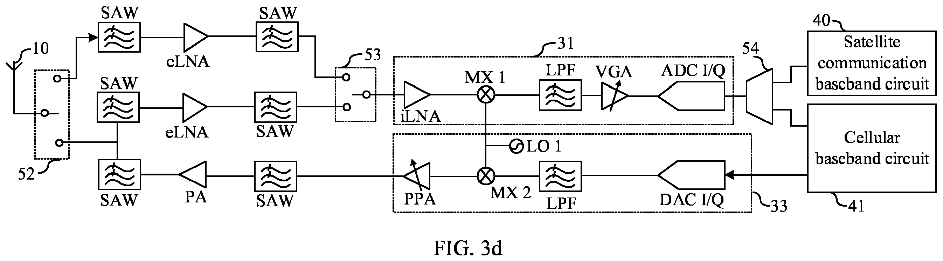

If the first wireless communication baseband circuit 41 is a cellular baseband circuit, when a frequency band of the third radio frequency signal overlaps a frequency band of the first radio frequency signal, as shown in FIG. 3c, the second switch 52 may be a three-to-one selector, to perform satellite communication by using the radio frequency signal received by the antenna 10, perform cellular communication by using the radio frequency signal received by the antenna 10, or transmit the third radio frequency signal by using the antenna 10 in a time division manner. Alternatively, as shown in FIG. 3d, when a frequency band of the third radio frequency signal does not overlap a frequency band of the first radio frequency signal, a bandwidth of the antenna 10 may correspond to a bandwidth of the first radio frequency signal and a bandwidth of the third radio frequency signal, the second switch 52 may be a two-to-one selector, and the second radio frequency front-end circuit 22 is electrically connected to the third radio frequency front-end circuit 23. In this way, satellite communication may be performed by using the radio frequency signal received by the antenna 10, while the third radio frequency signal may be transmitted by using the antenna 10.

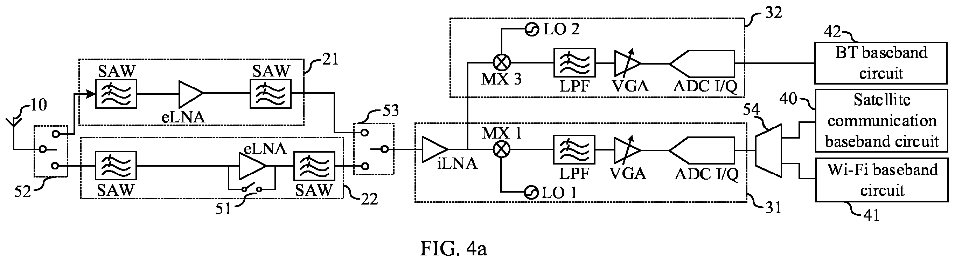

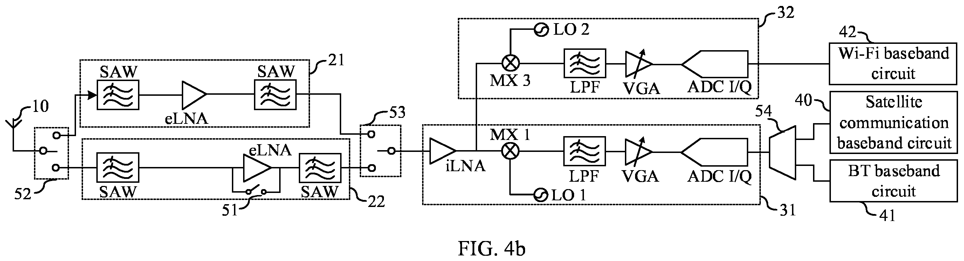

In another embodiment, as shown in FIG. 4a and FIG. 4b, the terminal device includes an antenna 10, a first radio frequency front-end circuit 21, a second radio frequency front-end circuit 22, a first radio frequency receive circuit 31, a satellite communication baseband circuit 40, and a first wireless communication baseband circuit 41. When being configured to electrically connect to the antenna 10 and the first radio frequency front-end circuit 21, the first radio frequency receive circuit 31 receives a first radio frequency signal, processes the first radio frequency signal into a first baseband signal, and sends the first baseband signal to the satellite communication baseband circuit 40. The first radio frequency receive circuit 31 is configured to: when being electrically connected to the antenna 10 and the second radio frequency front-end circuit 22, receive a second radio frequency signal, process the second radio frequency signal into a second baseband signal, and send the second baseband signal to the first wireless communication baseband circuit 41.

On this basis, the terminal device may further include a second radio frequency receive circuit 32 and a second wireless communication baseband circuit 42. The second radio frequency receive circuit 32 is configured to: when being electrically connected to the antenna 10 and the second radio frequency front-end circuit 22, receive the second radio frequency signal, process the second radio frequency signal into a third baseband signal, and send the third baseband signal to the second wireless communication baseband circuit 42.

In some possible implementations, the first wireless communication baseband circuit 41 and the second wireless communication baseband circuit 42 may be two of a BT baseband circuit, a Wi-Fi baseband circuit, and a cellular baseband circuit. In addition, the first wireless communication baseband circuit 41 and the second wireless communication baseband circuit 42 may be two different baseband circuits.

For example, as shown in FIG. 4a, the first wireless communication baseband circuit 41 is a Wi-Fi baseband circuit, and the second wireless communication baseband circuit 42 is a BT baseband circuit. The first radio frequency receive circuit 31 is electrically connected to the Wi-Fi baseband circuit or the satellite communication baseband circuit 40 through the fourth switch 54, and the second radio frequency receive circuit 32 is electrically connected to the BT baseband circuit. For ease of description, the following uses this as an example for description.

For another example, as shown in FIG. 4b, the first wireless communication baseband circuit 41 is a BT baseband circuit, and the second wireless communication baseband circuit 42 is a Wi-Fi baseband circuit. The first radio frequency receive circuit 31 is electrically connected to the BT baseband circuit or the satellite communication baseband circuit 40 through the fourth switch 54, and the second radio frequency receive circuit 32 is electrically connected to the Wi-Fi baseband circuit.

The terminal device may have two working states. In a first working state, the terminal device performs satellite communication when the antenna 10 is electrically connected to the first radio frequency receive circuit 31 through the first radio frequency front-end circuit 21. In a second working state, when the antenna 10 is electrically connected to the first radio frequency receive circuit 31 and the second radio frequency receive circuit 32 through the second radio frequency front-end circuit 22, the terminal device performs Wi-Fi communication and BT communication.

In the first working state, working conditions of the first radio frequency front-end circuit 21, the first radio frequency receive circuit 31, and the satellite communication baseband circuit 40 are the same as those existing when the antenna 10 is electrically connected to the first radio frequency receive circuit 31 through the first radio frequency front-end circuit 21 in the foregoing embodiment. Details are not described herein again.

For the second working state, as mentioned above, because both a frequency band range of Wi-Fi (for example, 2.4G Wi-Fi) communication and a frequency band range of BT communication are 2400 MHz to 2483.5 MHz, the first radio frequency receive circuit 31 and the second radio frequency receive circuit 32 may share the second radio frequency signal output by the second radio frequency front-end circuit 22. In this way, the first radio frequency receive circuit 31 and the second radio frequency receive circuit 32 are integrated on a same chip, to improve product integration of the terminal device and reduce board-level costs by reducing board-level cabling.

When the antenna 10 is electrically connected to the first radio frequency receive circuit 31 and the second radio frequency receive circuit 32 through the second radio frequency front-end circuit 22, a parameter of each component in the first radio frequency receive circuit 31 may be configured, to ensure that the first radio frequency receive circuit 31 receives a second radio frequency signal of a specific strength within a correct frequency band range. After receiving the second radio frequency signal, the first radio frequency receive circuit 31 performs frequency mixing, amplification, filtering, and analog-to-digital conversion on the second radio frequency signal, to obtain the second baseband signal, and sends the second baseband signal to the first wireless communication baseband circuit 41. Specific explanations and descriptions thereof are the same as the explanations and descriptions existing when the second radio frequency front-end circuit 22 is electrically connected to the first radio frequency receive circuit 31 in the foregoing embodiment. Details are not described herein again.

As shown in FIG. 4a and FIG. 4b, the second radio frequency receive circuit 32 may include a second frequency mixer MX 2, a built-in filter, an iLNA, a built-in VGA, an ADC, and the like. The terminal device may further include a second local oscillator circuit LO 2. A parameter of each component in the second radio frequency receive circuit 32 may be further configured, to ensure that the second radio frequency receive circuit 32 receives a second radio frequency signal of a specific strength within a correct frequency band range. After receiving the second radio frequency signal, the second radio frequency receive circuit 32 performs frequency mixing, amplification, filtering, and analog-to-digital conversion on the second radio frequency signal, to obtain the third baseband signal, and sends the third baseband signal to the second wireless communication baseband circuit 42. In this way, Wi-Fi communication and BT communication can be performed simultaneously.

In this way, a satellite communication function module, and a Wi-Fi function module and a BT function module may be deeply coupled and integrated on a same chip, to improve product integration of the terminal device, reduce board-level costs by reducing board-level cabling, and further avoid low integration of the chip due to independence of the satellite communication function module and the Wi-Fi function module from each other.

In the second working state, a signal strength of a satellite signal received by the antenna 10 is usually weak. Therefore, the first radio frequency front-end circuit 21 includes an eLNA, and amplifies the satellite signal through the eLNA. A signal strength of a wireless communication signal received by the antenna 10 is greater than the signal strength of the satellite signal. In some cases, if the wireless communication signal received by the antenna 10 reaches a preset signal strength, the wireless communication signal received by the antenna 10 does not need to be amplified through the second radio frequency front-end circuit 22. In some other cases, if the wireless communication signal received by the antenna 10 does not reach the preset signal strength, the wireless communication signal received by the antenna 10 needs to be amplified through the second radio frequency front-end circuit 22.

For wireless communication signals of different strengths, in this embodiment of this application, the second radio frequency front-end circuit 22 may include an eLNA and a first switch 51 that are connected in parallel. If the wireless communication signal received by the antenna 10 reaches the preset signal strength, the first switch 51 is turned on, and the wireless communication signal received by the antenna 10 does not need to be amplified through the eLNA. If the wireless communication signal received by the antenna 10 does not reach the preset signal strength, the first switch 51 is turned off, and the wireless communication signal received by the antenna 10 is amplified through the eLNA.

Herein, the wireless communication signal may be a radio frequency signal that is received by the antenna 10 and that is for Wi-Fi communication and BT communication. The preset signal strength may be specified according to an actual communication requirement. This is not limited in this embodiment of this application.

Certainly, for wireless communication signals of different strengths, the wireless communication signals may alternatively be amplified or not amplified in another manner in different cases. This is not limited in this embodiment of this application. For example, the foregoing eLNA and the first switch 51 that are connected in parallel may be integrated into the first radio frequency receive circuit 31. If the wireless communication signal received by the antenna 10 reaches the preset signal strength, the first switch 51 is turned on. If the wireless communication signal received by the antenna 10 does not reach the preset signal strength, the first switch 51 is turned off.

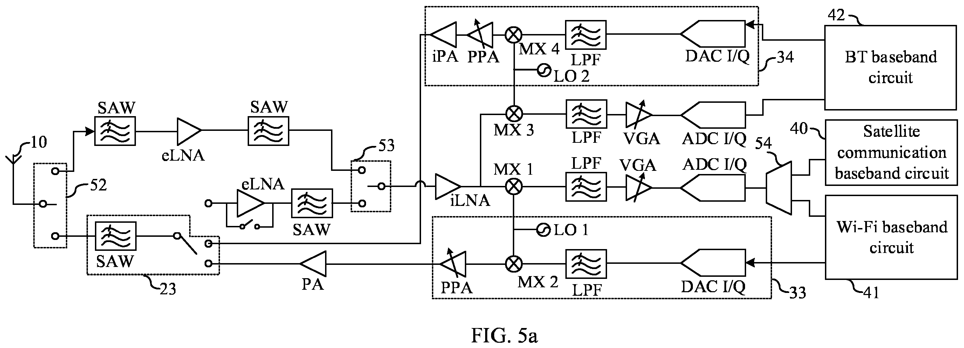

In some embodiments, as shown in FIG. 5a, the terminal device may further include a first baseband transmit circuit 33, a second baseband transmit circuit 34, and a third radio frequency front-end circuit 23.

An input end of the first baseband transmit circuit 33 is electrically connected to the first wireless communication baseband circuit 41, and an output end of the first baseband transmit circuit 33 is electrically connected to the third radio frequency front-end circuit 23. The first baseband transmit circuit 33 is configured to receive a fourth baseband signal sent by the first wireless communication baseband circuit 41. The first baseband transmit circuit 33 includes a DAC, a built-in frequency mixer, a built-in amplifier, and the like. The DAC, the built-in frequency mixer, and the built-in amplifier may be used to perform amplification, filtering, and frequency mixing on the fourth baseband signal, to obtain the third radio frequency signal. A frequency band and a signal strength of the third radio frequency signal meet the frequency band and the signal strength for Wi-Fi communication. Then, the third radio frequency signal is transmitted through the third radio frequency front-end circuit 23 and the antenna 10.

An input end of the second baseband transmit circuit 34 is electrically connected to the second wireless communication baseband circuit 42, and an output end of the second baseband transmit circuit 34 is electrically connected to the third radio frequency front-end circuit 23. The second baseband transmit circuit 34 is configured to receive a fifth baseband signal sent by the second wireless communication baseband circuit 42. The second baseband transmit circuit 34 includes a DAC, a built-in frequency mixer, a built-in amplifier, and the like. The DAC, the built-in frequency mixer, and the built-in amplifier may be used to perform amplification, filtering, and frequency mixing on the fifth baseband signal, to obtain the fourth radio frequency signal. A frequency band and a signal strength of the fourth radio frequency signal meet a frequency band and a signal strength for BT communication. Then, the fourth radio frequency signal is transmitted through the third radio frequency front-end circuit 23 and the antenna 10.

In this way, the terminal device may perform satellite communication or Wi-Fi communication by using the radio frequency signal received by the antenna 10, perform BT communication by using the radio frequency signal received by the antenna 10, transmit the third radio frequency signal by using the antenna 10, and transmit the fourth radio frequency signal by using the antenna 10 in a time division manner.

Herein, the third radio frequency front-end circuit 23 or the second radio frequency front-end circuit 22 may be electrically connected to the antenna 10 through a selector switch. When the third radio frequency front-end circuit 23 is electrically connected to the antenna 10 through the selector switch, the third radio frequency front-end circuit 23 may transmit, through the antenna 10, a third radio frequency signal for Wi-Fi communication or a fourth radio frequency signal for BT communication. When the second radio frequency front-end circuit 22 is electrically connected to the antenna 10 through the selector switch, the second radio frequency front-end circuit 22 may receive, through the antenna 10, a radio frequency signal for Wi-Fi communication or BT communication.

In some possible implementations, the first baseband transmit circuit 33 electrically connected to the first wireless communication baseband circuit 41 and the second baseband transmit circuit 34 electrically connected to the second wireless communication baseband circuit 42 may be integrated with the satellite communication baseband circuit 40, the first wireless communication baseband circuit 41, the first radio frequency receive circuit 31, and the second radio frequency receive circuit 32 on a same chip, to further improve product integration of the terminal device and reduce board-level costs by reducing board-level cabling.

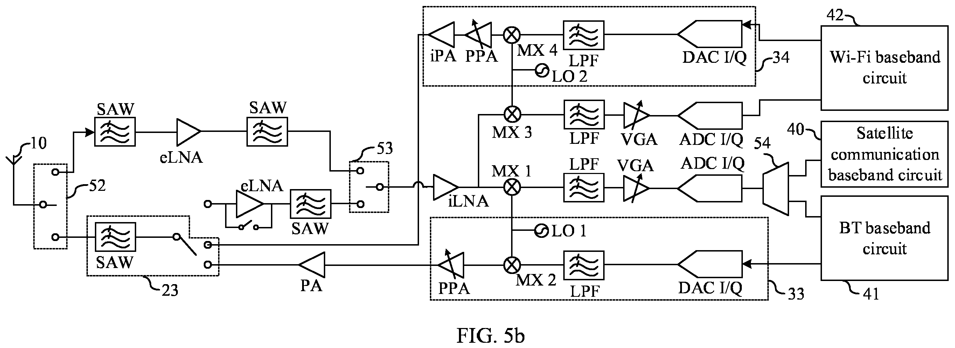

The foregoing describes a communication principle of the terminal device by using an example in which the first wireless communication baseband circuit 41 is a Wi-Fi baseband circuit and the second wireless communication baseband circuit 42 is a BT baseband circuit. In some other embodiments, as shown in FIG. 4b and FIG. 5b, when the first wireless communication baseband circuit 41 is a BT baseband circuit, and the second wireless communication baseband circuit 42 is a Wi-Fi baseband circuit, explanations, descriptions, and beneficial effects thereof are the same as those described above. Details are not described herein again.

In addition, for any one of the foregoing two embodiments, the first radio frequency front-end circuit 21, the second radio frequency front-end circuit 22, and the third radio frequency front-end circuit 23 may also be integrated with the first radio frequency receive circuit 31, the second radio frequency receive circuit 32, the satellite communication baseband circuit 40, the first wireless communication baseband circuit 41, the second wireless communication baseband circuit 42, and the like on a same chip, to further improve product integration of the terminal device and reduce board-level costs by reducing board-level cabling.

In the foregoing plurality of embodiments, an example in which the terminal device is a single communication system is used to describe a communication process of the terminal device. That is, the single communication system includes a receiver and a transmitter. The receiver includes an antenna 10, a first radio frequency front-end circuit 21, a second radio frequency front-end circuit 22, a first radio frequency receive circuit 31, a second radio frequency receive circuit 32, and the like. The transmitter includes a first baseband transmit circuit 33, a second baseband transmit circuit 34, a third radio frequency front-end circuit 23, an antenna 10, and the like. The receiver and the transmitter share the antenna 10.

In some other possible implementations, the terminal device may alternatively transmit a communication signal in a multiple-in multiple-out (multiple-in multiple-out, MIMO) manner. There are a plurality of receivers and a plurality of transmitters in the terminal device. The plurality of receivers and the plurality of transmitters are all electrically connected to the satellite communication baseband circuit 40, the first wireless communication baseband circuit 41, and the second wireless communication baseband circuit 42. Circuit structures and working principles of the plurality of receivers are the same as a circuit structure and working principle of the single receiver in any one of the foregoing embodiments, and circuit structures and working principles of the plurality of transmitters are the same as a circuit structure and working principle of the single transmitter in any one of the foregoing embodiments. Details are not described herein again.

A plurality of first radio frequency receive circuits 31 are configured to send first baseband signals to a same satellite communication baseband circuit 40, or send second baseband signals to a same first wireless communication baseband circuit 41. A plurality of second radio frequency receive circuits 32 are configured to send third baseband signals to a same second wireless communication baseband circuit 42.

The same first wireless communication baseband circuit 41 is configured to output a fourth baseband signal through a plurality of first baseband transmit circuits 33, and the same second wireless baseband circuit 42 is configured to output a fifth baseband signal through a plurality of second baseband transmit circuits 34.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal device, comprising an antenna, a first radio frequency front-end circuit, a second radio frequency front-end circuit, a first radio frequency receive circuit, a satellite communication baseband circuit, and a first wireless communication baseband circuit, wherein
the first radio frequency receive circuit is configured to: when being electrically connected to the antenna and the first radio frequency front-end circuit, receive a first radio frequency signal, process the first radio frequency signal into a first baseband signal, and send the first baseband signal to the satellite communication baseband circuit; and
the first radio frequency receive circuit is further configured to: when being electrically connected to the antenna and the second radio frequency front-end circuit, receive a second radio frequency signal, process the second radio frequency signal into a second baseband signal, and send the second baseband signal to the first wireless communication baseband circuit.

2. The terminal device according to claim 1, wherein the terminal device further comprises a second radio frequency receive circuit and a second wireless communication baseband circuit; and
the second radio frequency receive circuit is configured to: when being electrically connected to the antenna and the second radio frequency front-end circuit, receive the second radio frequency signal, process the second radio frequency signal into a third baseband signal, and send the third baseband signal to the second wireless communication baseband circuit.

3. The terminal device according to claim 2, wherein the second radio frequency front-end circuit comprises a low noise amplifier and a first switch that are connected in parallel; and
the first switch is turned on or turned off when the first radio frequency receive circuit is electrically connected to the antenna and the second radio frequency front-end circuit, or when the first radio frequency receive circuit and the second radio frequency receive circuit are electrically connected to the antenna and the second radio frequency front-end circuit.

4. The terminal device according to any one of claims 1 to 3, wherein the terminal device further comprises a second switch and a third switch;
the antenna is electrically connected to the first radio frequency front-end circuit or the second radio frequency front-end circuit through the second switch; and
the first radio frequency receive circuit is electrically connected to the first radio frequency front-end circuit or the second radio frequency front-end circuit through the third switch.

5. The terminal device according to claim 4, wherein the terminal device further comprises a fourth switch; and
the first radio frequency receive circuit is electrically connected to the satellite communication baseband circuit or the first wireless communication baseband circuit through the fourth switch.

6. The terminal device according to claim 2 or 3, wherein the first wireless communication baseband circuit and the second wireless communication baseband circuit are Bluetooth baseband circuits, Wi-Fi baseband circuits, or cellular baseband circuits.

7. The terminal device according to claim 6, wherein the terminal device further comprises a baseband transmit circuit and a third radio frequency front-end circuit; and
the baseband transmit branch is configured to receive the fourth baseband signal sent by the first wireless communication baseband circuit, process the fourth baseband signal into a third radio frequency signal, and send the third radio frequency signal to the antenna through the third radio frequency front-end circuit.

8. The terminal device according to claim 7, wherein the first wireless communication baseband circuit is a cellular baseband circuit; and
a frequency band of the third radio frequency signal overlaps a frequency band of the first radio frequency signal, and the second switch is a three-to-one selector; or
a frequency band of the third radio frequency signal does not overlap a frequency band of the first radio frequency signal, the second switch is a two-to-one selector, and the second radio frequency front-end circuit is electrically connected to the third radio frequency front-end circuit.

9. The terminal device according to claim 7 or 8, wherein the first radio frequency receive circuit, the satellite communication baseband circuit, and the first wireless communication baseband circuit are integrated on a same chip.

10. The terminal device according to claim 9, wherein the first radio frequency front-end circuit, the second radio frequency front-end circuit, the first radio frequency receive circuit, the satellite communication baseband circuit, and the first wireless communication baseband circuit are integrated on a same chip.
